# FASCICULE DE BREVET EUROPEEN

(11) **EP 1 522 369 B1**
(45) Date de publication et mention de la délivrance du brevet: **05.08.2009**
(21) Numéro de dépôt: 04300655.0
(22) Date de dépôt: 05.10.2004
(51) Int. Cl.: B23K 9/04

(54) **Procédé de réparation de pièces métalliques notamment d'aubes de turbine de moteur à turbine à gaz**
Reparaturverfahren für metallische Bauteile, insbesondere für Schaufeln von Gasturbinen
Method of repairing metal articles, preferably blades of gas turbines

(30) Priorité: 10.10.2003 FR 0311885
(43) Date de publication de la demande: 13.04.2005
(73) Titulaire: SNECMA, 75015 Paris (FR)
(72) Inventeur: Boudereau, Christian, 77550, Moissy Cramayel (FR); Varin, Jean-Jacques, 95300, Pontoise (FR); Boulnois, Michel, 77127, Lieusaint (FR); Boussaboun, Hassan, 95170, Deuil La Barre (FR); Caruana, Charles, 92600, Asnières (FR); Caux, Jean-Marc, 95350, Saint Brice (FR); Chareyre, Francis, 95130, Franconville (FR); Defrocourt, Gérard, 95110, Sannois (FR); Herault, Patrick, 60340, Saint Leu d'Esserent (FR); Sampaio, Clément, 95360, Montmagny (FR)
(74) Mandataire: David, Daniel

(56) Documents cités:
- EP-A- 1 136 593
- EP-A- 1 153 699
- DE-A- 3 644 702
- FR-A- 2 292 107
- US-A- 4 155 152
- US-A- 4 219 592

## Description

La présente invention concerne des pièces métalliques et notamment les aubes de turbines à gaz. En particulier, elle vise la réparation des parties d'aubes qui sont revêtues d'une couche d'un matériau anti-usure pour résister aux contraintes dues aux frottements importants pendant le fonctionnement du moteur. Le procédé de réparation s'applique aux aubes mobiles de rotor ou fixes de distributeur.

Une aube mobile de turbine comprend un pied par lequel elle est fixée au disque du rotor, une plate-forme délimitant la veine de gaz et une pale. Selon le moteur et l'étage de turbine, la pale se termine, à son extrémité éloignée du pied, par un élément transversal, appelé talon, qui délimite la surface externe de la veine de gaz. Le talon comporte un bord avant et un bord arrière orientés transversalement par rapport au sens d'écoulement du gaz. Les deux bords sont reliés par deux bords latéraux avec lesquels le talon vient en contact avec les talons des deux aubes adjacentes sur le rotor. Ces bords latéraux ont un profil dit en Z : deux portions axiales sont reliées entre elles par une portion sensiblement transversale.

Dans le but d'amortir les vibrations auxquelles elles sont soumises en fonctionnement, les aubes sont montées sur le disque avec une contrainte de torsion autour de leur axe principal. Les talons sont dessinés pour que les aubes soient ainsi mises en contrainte de torsion par appui avec leurs voisines le long des dites portions de surface transversale. En raison des vibrations et des efforts transmis entre les deux surfaces en contact, il s'ensuit un frottement sous tension qui est un facteur important d'usure.

Ce problème d'usure se rencontre aussi sur les surfaces de contact des plates-formes internes des aubes ou des secteurs de distributeur. Les bords latéraux des aubes ou des secteurs adjacents sont en forme de Z également avec, en particulier, une portion transversale. En raison des vibrations ces parties sont le siège d'usure.

Le matériau constituant l'aube est généralement peu résistant à ces phénomènes d'usure dans les conditionnements de fonctionnement du moteur. Pour prolonger la durée de vie de la pièce, on en protège les parties sensibles mentionnées ci-dessus, en appliquant un matériau résistant à l'usure. Il peut s'agir de plaquettes d'alliage spécifique présentant une dureté élevée que l'on vient braser sur le substrat métallique comme cela est décrit dans le brevet US6164916 et qui forment les surfaces d'appui avec les pièces voisines. Selon une autre technique connue, pour la fabrication de pièces neuves, on procède par chargement progressif de la surface à protéger éventuellement après avoir enlevé localement par meulage, sur une profondeur déterminée, la matière du substrat au moyen d'une baguette d'un matériau anti-usure que l'on met en fusion en même temps que la couche supérieure du substrat métallique. On apporte la chaleur nécessaire au moyen d'une source appropriée. Celle-ci peut être produite par un arc électrique gainé de gaz neutre ou bien par un faisceau laser.

La présente invention concerne les pièces comportant une surface résistante à l'usure obtenue par chargement de matière anti-usure par soudage. Cette technique est désignée dans le domaine par le terme de "stellitage". On met en oeuvre selon cette technique un alliage à base de cobalt. Ces alliages de cobalt sont commercialisés par exemple sous la marque "Stellite".

Malgré la protection conférée par la couche anti-usure, on ne peut éviter que les zones de contact en raison des frottements et des sévères conditions de fonctionnement ne s'altèrent. Au delà d'un certain seuil d'usure, il est nécessaire de réparer et de restaurer la géométrie de l'aube Dans le cas d'aubes de turbine par exemple si la perte de matière par usure devient trop importante, la contrainte de torsion sur l'aube disparaît laissant la place aux phénomènes vibratoires.

La présente invention a pour objet la réparation de telles pièces dont les zones anti-usure obtenues par chargement de matière sont endommagées et ne sont plus éventuellement fonctionnelles.

Conformément à l'invention, le procédé de réparation d'une pièce métallique d'un moteur à turbine à gaz comportant localement une couche anti-usure d'origine formée par le chargement par soudure d'un matériau anti-usure sur une partie de sa surface soumise à une usure par frottement et dont ladite couche est partiellement usée, est caractérisé par le fait qu'il comprend une étape de rectification de la couche anti-usure au moyen d'une meule (M) disposée de manière à enlever une épaisseur (P) de matière déterminée par rapport à la cote initiale de la surface (93C, 94C) de ladite couche dans laquelle on laisse subsister sur au moins une partie du fond de la zone rectifiée une trace de ladite couche anti-usure d'origine, et une étape de dépôt par soudure d'une nouvelle couche de matériau anti-usure.

Le matériau anti-usure est de préférence un alliage à base de cobalt généralement utilisé dans le domaine et adapté à l'application.

Par le procédé de l'invention et en particulier la conservation d'une trace de matériau anti-usure dans le fond de la zone rectifiée, on assure un accrochage satisfaisant du matériau qui est appliqué ultérieurement par soudage. On a constaté aussi avec surprise que cette couche intermédiaire formait un moyen de protection suffisant pendant le soudage pour éviter la propagation de défauts dans le substrat métallique. Cette protection est particulièrement avantageuse dans la partie du profil en Z qui est située dans l'angle rentrant entre la portion longitudinale et la portion transversale revêtue de matériau anti-usure. Cette partie est critique car elle est le siège privilégié de formation de défauts.

Ainsi, lorsque la réparation concerne une face d'un profil en Z, la trace s'étend donc au moins dans la zone rentrante du profil. Avantageusement, on procède à la rectification de la couche d'origine, de telle façon que la trace forme une couche intermédiaire entre le substrat métallique et la nouvelle couche. La trace, après rectification s'étend dans ce cas sur tout le fond de la zone rectifiée.

Le procédé s'applique aussi bien à une aube mobile qu'à une aube statorique. En particulier, il s'applique à une aube mobile de turbine à talon, dont le talon est à profil en Z et comprend une piqûre en fond de profil. Une telle piqûre consiste en un alésage au profil arrondi dans la zone rentrante du Z. Elle vise à empêcher le développement de criques dans cette zone.

Le cas échéant, la meule comprend un profil en Z. Par exemple, la meule est elle-même rectifiée en continu pendant l'étape de rectification du talon. Par cette caractéristique on permet une automatisation de la procédure de rectification des pièces.

L'invention a également pour objectif un procédé incluant le contrôle, par une méthode non destructive telle que le ressuage, de la qualité de la réparation et en particulier de la présence ou non de défauts.

Conformément à une autre caractéristique on parvient à cet objectif en procédant, avant le dépôt d'une nouvelle couche de matériau anti-usure, à une étape de nettoyage de manière à éliminer tout dépôt de pollution et/ou d'oxydation résultant de l'utilisation de la pièce. En particulier l'étape de nettoyage comprend une étape de nettoyage chimique suivie d'une étape de sablage.

En effet les pièces à réparer ont fonctionné dans des environnements générant des dépôts en surface. Par un nettoyage approprié on prévient tout dépôt susceptible de venir polluer les parois du four lors de l'étape de chauffage sous vide avant contrôle non destructif tel que le ressuage.

Conformément à une autre caractéristique, le sablage est effectué avec une poudre de faible granulométrie, de 40 à 90 µm, en particulier la granulométrie est de 50µm. On évite ainsi d'endommager le revêtement de la pale.

Conformément à une autre caractéristique, le procédé étant appliqué à une aube comportant en surface des orifices d'évacuation de l'air de refroidissement, on insuffle de l'air à travers la pale et le sablage est effectué à sec, l'air d'entraînement étant à une pression inférieure à celle de l'air insufflé.

D'autres avantages et caractéristiques du procédé apparaîtront à la lecture qui suit d'un mode de réalisation du procédé de l'invention, en référence aux dessins sur lesquels
- la figure 1 représente une aube de turbine avec talon, vue de côté,
- la figure 2 représente une aube de turbine avec talon vue de dessus,
- la figure 3 représente une vue agrandie de la partie du talon comprenant une couche anti-usure,
- la figure 4 est une représentation schématique d'une installation de rectification par meulage,
- la figure 5 est une vue de côte d'une partie de la figure 4,
- la figure 6 représente le talon de l'aube et de la meule de finition en position.

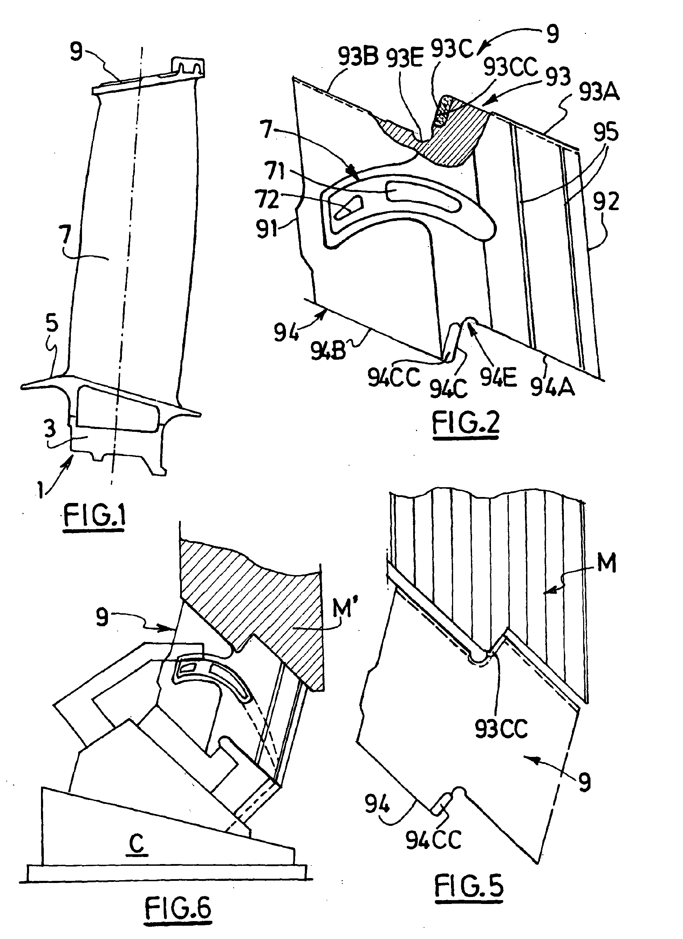

On a représenté sur les figures 1 et 2 une aube de turbine utilisée dans un étage haute pression d'un moteur soumis à des conditions extrêmes comme par exemple un moteur militaire. Cette aube comprend un pied 3, une plate-forme 5 formant un élément de la paroi interne délimitant la veine de gaz qui traverse la turbine et la pale 7 qui est balayée par les gaz. La pale 7 est solidaire d'un talon 9, formant un élément de la paroi externe délimitant la veine de gaz qui traverse l'étage de turbine sur lequel l'aube est montée. La figure 2 montre le talon 9 vu de dessus.

Sur ce modèle le talon de forme générale parallélépipédique, comprend une face amont 91 perpendiculaire au flux gazeux une face aval 92 qui est parallèle à la première, et deux faces latérales 93 et 94 qui relient les deux précédentes. On voit aussi sur cette figure l'extrémité supérieure de la pale 7 avec ses évents 71, 72 du fluide de refroidissement qui en a parcouru les cavités internes. Deux lames 95, parallèles aux faces amont et aval, forment avec la paroi du stator adjacent non visible sur la figure un joint à labyrinthe. La paroi latérale 93 du talon comprend deux portions longitudinales 93A et 93B parallèles entre elles et décalées l'une par rapport à l'autre. Elles sont reliées par un élément de paroi 93C formant ici un angle de 80° avec la paroi 93B. L'ensemble des trois éléments 93A 93B et 93C forme un profil dit en Z. Cet élément de paroi 93C est revêtu d'une couche 93CC en matériau anti-usure, tel qu'un alliage au cobalt de la gamme des produits commercialisés sous la marque "Stellite". Cette couche a été obtenue, selon un procédé connu, éventuellement par dégagement du substrat métallique sur une profondeur déterminée puis par apport de matière anti-usure. L'apport est généralement effectué par soudage TIG ou laser.

De la même façon, la paroi 94 comprend deux parties 94A et 94B parallèles reliées par une paroi transversale 94C. Celle-ci est orientée dans la direction opposée à celle de la paroi 93C.

Les couches 93CC et 94CC ont une épaisseur déterminée, de l'ordre de 1 à 3 mm par exemple. Après montage des aubes sur le rotor, chaque talon est en appui, forcé en raison de la contrainte de torsion appliquée aux pales, sur les talons des deux aubes voisines par les éléments de paroi transversaux 93C et 94C.

Dans l'exemple représenté sur la figure 2, un usinage en arc de cercle, une piqûre 93E, a été pratiqué dans la zone formant le sommet de l'angle rentrant formé par les deux éléments 93C et 93B. Il en est de même sur l'autre face latérale 94 avec la piqûre 94E .

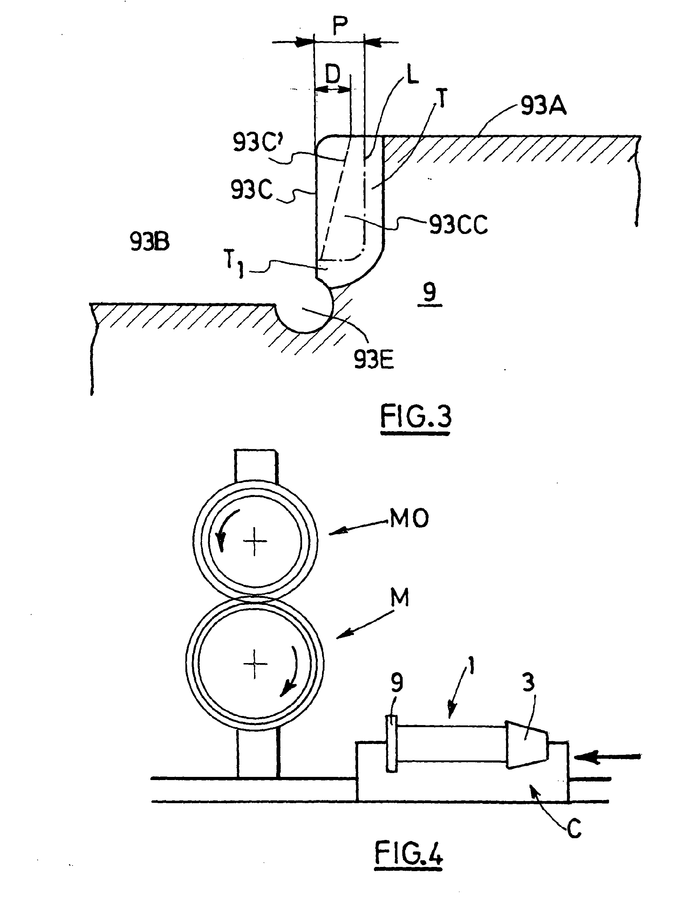

La figure 3 montre la zone de la couche 93CC agrandie. Cette couche, en étant soumise aux efforts de frottement rapportés plus haut, s'use jusqu'à ce que, après un certain nombre de cycles de fonctionnement du moteur, la surface 93C recule en 93C' marquée en trait pointillé.

Si l'usure n'est pas trop importante, inférieure à une distance D déterminée par rapport à la cote initiale de la surface 93C, il devient économique de réparer l'aube. C'est l'objet du procédé de l'invention.

Conformément à une première étape, on enlève une partie de la couche 93CC, 94CC respectivement.

On a représenté schématiquement sur la figure 4, une installation permettant de réaliser cette étape du procédé. L'installation comprend une meule M de profil en forme de Z complémentaire à celui de la face 93 ou 94 respectivement. Une molette MO à surface de type diamanté, est dispose contre la meule et a pour fonction d'en régénérer le profil. Un chariot C est entraîné sur des rails perpendiculairement à l'axe de la meule. Ce chariot supporte l'aube de telle façon que le déplacement du talon 9 soit tangent à la surface en Z de la meule, avec un contact sur une profondeur déterminée pour la partie transversale 93C ou 94C du profil. On voit également le montage de l'aube sur le chariot C sur la figure 6.

On voit sur la figure 5, qui est une vue selon la direction du déplacement du chariot, que la meule M enlève une quantité de matière dans la couche 93CC, 94CC respectivement sur une profondeur déterminée par le réglage de la position du chariot par rapport à la meule. Ce réglage s'effectue par déplacement latéral du chariot. Sur la figure 3 on a représenté par une ligne en tirets la limite L de l'entame de la couche par la meule M.

On détermine la profondeur P de l'enlèvement de matière par rapport à la cote initiale de la surface 93C resp. 94C, de la couche 93CC resp. 94CC à l'état neuf. Sachant par exemple que cette couche présente à l'état neuf une épaisseur de 3 mm par exemple, on enlève la matière par meulage jusqu'à une profondeur de 1 mm, sachant que P est au moins égal à D, la profondeur d'usure.

Comme on le voit sur les figures 3 et 5, il subsiste avantageusement une trace T sur toute la longueur de la couche anti-usure. On n'a pas enlevé la matière jusqu'au substrat métallique. L'invention couvre cependant le cas où on creuse la couche de manière à laisser une trace sur une partie seulement du fond de la zone rectifiée. Cette trace constitue une zone d'accrochage pour la soudure ultérieure.

Conformément à une caractéristique de l'invention, on conserve au moins une trace T1 de matière anti-usure sur la partie adjacente à la piqûre 93 E resp. 94 E.

L'étape de rectification comprend aussi une phase par laquelle, le cas échéant, on élimine par meulage le revêtement de protection de l'aube à proximité de la zone rectifiée pour mettre à nu le métal constituant l'aube. Pour le talon, on meule sa face externe et sa face interne dans une zone adjacente aux couches 93CC et 94 CC respectivement

Le procédé comprend une étape de nettoyage de l'aube. Cette étape peut être effectuée avant la rectification de la couche anti-usure ou bien dans la suite de celle-ci.

Les aubes qui sont sélectionnées pour la réparation comportent généralement un dépôt de matière dure étrangère dont la composition, produits d'oxydation ou polluants, dépend des conditions notamment environnementales dans lesquelles le moteur a fonctionné. Il est important de supprimer ce dépôt avant tout passage au four sous vide car la matière le constituant viendrait polluer les parois de ce dernier et perturber les traitements ultérieurs.

On procède au nettoyage de telle façon que le revêtement protecteur de faible épaisseur de la pale ne soit pas altéré.

La gamme de nettoyage comprend un dégraissage alcalin, suivi d'un décapage chimique. Ce dernier est effectué par passage de la pièce dans plusieurs bains spécifiques qu'il appartient à l'homme du métier de préparer. Ils comprennent par exemple successivement un bain alcalin fort, un décalaminant, un bain de permanganate et un bain d'acide faible pour neutraliser les attaques alcalines fortes.

On termine le nettoyage par un sablage à sec, au corindon par exemple. La granulométrie est faible, 50µm par exemple pour ne pas blesser le revêtement.

Lorsque l'aube comporte des trous d'évacuation d'air de refroidissement sur la pale, le cas le plus général, on insuffle, pendant l'opération de sablage, de l'air dans l'aube à travers les cavités internes de l'aube pour éviter que des grains ne viennent les obturer. Dans ce but, on s'assure que la pression de l'air de sablage soit inférieure à celle de l'air s'échappant par les orifices de la pale.

La pièce ainsi nettoyée et rectifiée est conduite jusqu'au poste de soudage, par exemple de type TIG.

Le soudage est effectué avec une électrode de tungstène sous gaz inerte, argon par exemple.

Le métal d'apport est le même que celui qui constitue la trace de la couche anti-usure initiale. Il est appliqué par gouttes successives. On en compte par exemple 6 ou 7. La forme de la trace en particulier de la partie T1, permet de ne pas entraîner le dépôt de matière dans la zone de la piqûre, 93 E ou 94 E, et évite la formation de défauts.

Une fois l'apport de métal anti-usure achevé, on procède à un usinage de finition pour ramener la couche au profil nominal. On utilise dans ce but une meule présentant un profil complémentaire de celui du talon. On a représenté sur la figure 6 en vue le long de la pale, la disposition du talon par rapport à la meule M' après rectification. Le profil de cette dernière correspondant de préférence exactement à celui du talon. On observe en particulier que la meule présente un bourrelet qui vient s'adapter dans la piqûre.

Lorsque la pièce est ainsi usinée et remise à la cote initiale, on achève les opérations de réparation en procédant à un contrôle visant à déceler la présence de défauts formés éventuellement par le soudage, tels que des criques.

On prépare la pièce en la soumettant pendant une durée déterminée à un traitement thermique dans un four sous vide pour détendre les contraintes, et le cas échéant ouvrir les criques éventuellement formées.

On procède ensuite à un examen par ressuage. Ce mode d'examen consiste à appliquer un liquide fluorescent, dit pénétrant, sur la surface à contrôler. Ce liquide pénètre à l'intérieur des défauts existant sous la forme de fissures et de porosités. On élimine l'excès de pénétrant par lavage. En éclairant la pièce avec une lampe à lumière ultra violette, on rend les défauts visibles.

## Revendications

1. Procédé de réparation d'une pièce métallique d'un moteur à turbine à gaz comportant une couche anti-usure (93CC, 94CC) formée par le chargement par soudure d'un matériau anti-usure sur une partie de sa surface soumise d'une usure par frottements et dont ladite couche est partiellement usée, comprenant une étape de rectification de la dite couche au moyen d'une meule (M) disposée de manière à enlever une épaisseur (P) de matière déterminée par rapport à la cote initiale de la surface (93C, 94C) de la dite couche, dans laquelle on laisse subsister sur au moins une partie du fond de la zone rectifiée, une trace (T) de la dite couche anti-usure, et une étape dans laquelle on dépose par soudure une nouvelle couche de matériau anti-usure.

2. Procédé selon la revendication précédente, appliqué à une aube mobile ou statorique.

3. Procédé selon la revendication précédente, appliqué à une aube mobile de turbine à talon (9).

4. Procédé selon la revendication précédente, appliqué à une aube dont le talon (9) à profil en Z comprend une piqûre (93 E, 94 E) en fond de profil.

5. Procédé selon la revendication précédente dont la meule (M) comprend un profil en Z.

6. Procédé selon la revendication 1 dont la meule (M) est elle-même rectifiée en continu pendant l'étape de rectification de la couche.

7. Procédé selon la revendication précédente, comprenant avant dépôt d'une nouvelle couche de matériau anti-usure, une étape de nettoyage de manière à éliminer tout dépôt de pollution et/ou d'oxydation résultant de l'utilisation de la pièce.

8. Procédé selon la revendication précédente dont l'étape de nettoyage comprend une étape de nettoyage chimique suivie d'une étape de sablage.

9. Procédé selon la revendication précédente dont le sablage est effectué avec une poudre de faible granulométrie.

10. Procédé selon la revendication précédente, appliqué à une aube comportant en surface des cavités ou orifices d'évacuation de l'air de refroidissement, dans lequel on insuffle de l'air à travers la pale et le sablage est effectué à sec, l'air d'entraînement étant à une pression inférieure à celle de l'air insufflé.

11. Procédé selon l'une des revendications précédentes, comprenant une étape de contrôle non destructif de la pièce.

## Claims

1. A method for repairing a metal part of a gas turbine engine including an anti-wear layer (93CC, 94CC) formed by loading through welding an anti-wear material onto a portion of a surface thereof subjected to a friction wear and said layer of which is partly worn, including a step for grinding said layer by means of a grinding wheel (M) disposed so as to remove a thickness (P) of material determined with respect to the initial dimension of the surface (93C, 94C) of said layer, wherein a trace (T) of said anti-wear layer is left on at least a portion of the bottom of the grinded area, and a step in which a new layer of anti-wear material is deposited though welding.

2. The method according to the preceding claim, applied to a revolving or stator vane.

3. The method according to the preceding claim, applied to a revolving vane of a shroud turbine (9).

4. The method according to the preceding claim, applied to a vane, the shroud (9) with a Z profile of which includes a pit (93E, 94E) at the bottom of the profile.

5. The method according to the preceding claim, wherein the grinding wheel (M) includes a Z profile.

6. The method according to claim 1, wherein the grinding wheel (M) is in turn grinded continuously during the step of grinding the layer.

7. The method according to the preceding claim, including before depositing a new layer of anti-wear material, a washing step in order to remove any pollution and/or oxidation deposit resulting from a use of the part.

8. The method according to the preceding claim, wherein the washing step includes a chemical washing step followed by a blasting step.

9. The method according to the preceding claim, wherein the blasting is carried out with a small particle size powder.

10. The method according to the preceding claim, applied to a vane including at the surface thereof cavities or ports for discharging cooling air, wherein air is blown through the blade and the blasting is a dry blasting, the drive air being at a pressure lower than that of the blown air.

11. The method according to any of the preceding claims, including a step of non-destructively monitoring the part.

## Patentansprüche

1. Verfahren zum Reparieren eines Metallteils eines Gasturbinenmotors, umfassend eine Schleißauflage (93CC, 94CC), die durch das Auftragen durch Schweißen eines verschleißfesten Materials auf einem Teil ihrer Oberfläche, der einem Verschleiß durch Reibung ausgesetzt ist, und dessen Auflage teilweise abgenutzt ist, gebildet wird, wobei das Verfahren einen Schritt des Abschleifens der Auflage mittels einer Schleifscheibe (M), die derart angeordnet ist, dass sie eine Materialdicke (P) entfernt, die im Verhältnis zur ursprünglichen Abmessung der Oberfläche (93C, 94C) der Auflage bestimmt wird, wobei auf mindestens einem Teil des Bodens des abgeschliffenen Bereichs eine Spur (T) der Schleißauflage zurückgelassen wird, und einen Schritt, in dem durch Schweißen eine neue Auflage des verschleißfesten Materials abgesetzt wird, umfasst.

2. Verfahren nach dem vorhergehenden Anspruch, angewendet auf eine Lauf- oder Statorschaufel.

3. Verfahren nach dem vorhergehenden Anspruch, angewendet auf eine Turbinenlaufschaufel (9) mit Spitzenabdeckung.

4. Verfahren nach dem vorhergehenden Anspruch, angewendet auf eine Schaufel, deren Spitzenabdeckung (9) mit Z-Profil auf dem Profilboden einen Einstich (93E, 94E) umfasst.

5. Verfahren nach dem vorhergehenden Anspruch, wobei die Schleifscheibe ein Z-Profil umfasst.

6. Verfahren nach Anspruch 1, wobei die Schleifscheibe (M) selber während des Schritts des Abschleifens der Auflage durchgehend abgeschliffen wird.

7. Verfahren nach dem vorhergehenden Anspruch, umfassend vor dem Absetzen einer neuen Auflage eines verschleißfesten Materials einen Reinigungsschritt, um mögliche Schmutz- und/oder Rostablagerungen, die sich aus der Verwendung des Teils ergeben, zu beseitigen.

8. Verfahren nach dem vorhergehenden Anspruch, wobei der Reinigungsschritt einen Schritt der chemischen Reinigung umfasst, auf den ein Schritt des Sandstrahlens folgt.

9. Verfahren nach dem vorhergehenden Anspruch, wobei das Sandstrahlen mit einem feinkörnigen Pulver ausgeführt wird.

10. Verfahren nach dem vorhergehenden Anspruch, angewendet auf eine Schaufel, die an der Oberfläche Spitzabdeckungen oder Öffnungen zum Ablassen der Kühlluft umfasst, wobei Luft durch das Blatt eingeblasen wird und das Sandstrahlen trocken erfolgt, wobei die Antriebsluft sich auf einem Druck befindet, der geringer ist als derjenige der eingeblasenen Luft.

11. Verfahren nach einer der vorhergehenden Ansprüche, umfassend einen Schritt der zerstörungsfreien Prüfung des Teils.
